# EUROPÄISCHE PATENTANMELDUNG

(11) **EP 1 902 627 A2**
(43) Veröffentlichungstag der Anmeldung: **26.03.2008**
(21) Anmeldenummer: 07018085.6
(22) Anmeldetag: 14.09.2007
(51) Int. Cl.: A23D 9/05, A23D 7/00, A23L 1/30

(54) **Umhüllte Partikel und deren Verwendung**

(30) Priorität: 23.09.2006 EP 06019946
(71) Anmelder: Cognis IP Management GmbH, 40589 Düsseldorf (DE)
(72) Erfinder: Horlacher, Peter, 89287 Bellenberg (DE); Sander, Andreas, 89257 Illertissen (DE)

(57) **Zusammenfassung**

Die vorliegende Erfindung betrifft Partikel, die eine Kern-Hülle Struktur haben (so genannte core-shell Struktur), wobei der Kern ein Öl oder Fett enthält, und wobei die Hülle ein zweites Fett enthält. Weiterhin betrifft die vorliegende Erfindung die Verwendung der erfindungsgemäßen Partikel zur Herstellung von Lebensmitteln sowie ein Verfahren zur Herstellung eines Lebensmittels umfassend das in Kontakt Bringen der erfindungsgemäßen Partikel mit weiteren Bestandteilen des Lebensmittels sowie ein Lebensmittel, das die erfindungsgemäßen Partikel nach einem der Ansprüche 1 bis 6 enthält.

## Beschreibung

Die vorliegende Erfindung betrifft Partikel, die eine Kern-Hülle Struktur haben (so genannte core-shell Struktur), wobei der Kern ein Öl oder Fett enthält, und wobei die Hülle ein zweites Fett enthält. Weiterhin betrifft die vorliegende Erfindung die Verwendung der erfindungsgemäßen Partikel zur Herstellung von Lebensmitteln sowie ein Verfahren zur Herstellung eines Lebensmittels umfassend das in Kontakt Bringen der erfindungsgemäßen Partikel mit weiteren Bestandteilen des Lebensmittels sowie ein Lebensmittel, das die erfindungsgemäßen Partikel nach einem der Ansprüche 1 bis 6 enthält.

Margarine, die Omega-3-Fettsäuren enthält, ist bekannt und auf dem Markt erhältlich, zum Beispiel von dem Unternehmen Unilever, das solche Margarine unter dem Markennamen Becel^{®} vertreibt. Omega-3-Fettsäuren sind. Die Omega-3-Fettsäuren sind dabei in der Regel als Glycerinester in der Margarine enthalten.

Es ist aus verschiedenen ernährungsphysiologischen Gründen vorteilhaft, Margarine oder auch andere fetthaltige Lebensmittel zur Verfügung zu haben, die Omega-3-Fettsäuren enthalten.

Als Quelle für Omega-3-Fettsäuren können zum Beispiel hochgradig raffinierte Fischöle eingesetzt werden. Diese Fischöle müssen in der Regel hochgradig raffiniert (d. h. insbesondere auch desodoriert) sein, damit der sonst typische Nebengeschmack vermieden wird.

Neben dem Einsatz von Fischöl in Margarine gibt es zahlreiche weitere Gebiete der Lebensmitteltechnologie, die es erfordern, Öle oder Fette einzusetzen, die leicht verderblich sind, weil sei zum Beispiel empfindlich sind gegen Oxidation, wie dies zum Beispiel bei Fischöl der Fall ist.

US-A 6 136 364 offenbart eine Emulsion, wobei Ölpartikel in Wasser emulgiert vorliegen und diese erste Emulsion, wiederum Partikel bildet, die in einer kontinuierlichen Ölphase emulgiert vorliegen. Partikel mit einer Kern-Hülle Struktur werden nicht offenbart, vielmehr schließt die besagte Ölphase eine Vielzahl von "Kernen" ein, die ihrerseits Öl-in-Wasser-Emulsionen sind.

US-A 4 710 391 offenbart feste Partikel, die Paprika-Aromen, Gummi arabicum und modifizierte Stärke enthalten. Diese Partikel werden dann mit einem Fett umhüllt. Die hier offenbarten Partikel haben also nicht einen Kern, dessen Schmelzpunkt mindestens 1 °C niedriger ist als der Schmelzpunkt der Hülle. Vielmehr ist der Kern heterogen und hat, wenn überhaupt ein Schmelzpunkt definierbar ist, einen hohen Schmelzpunkt (US-A 4 710 391, Spalte 3, Zeile 6: "hard particles").

US-A 3 867 556 offenbart Partikel enthaltend Butteröl und gehärtetes Palmfett. Eine Kern-Hülle-Struktur wird nicht offenbart.

US-A 2 828 206 offenbart in Beispiel 3 eine sprühgetrocknete Multikomponentenmischung, welche feste Partikel bildet. Diese festen Partikel werden mit gehärtetem Baumwollsaatöl umhüllt. Der Schmelzpunkt der umhüllten Partikel wird nicht offenbart.

JP 09 125 087 offenbart Partikel, die aus einem mit Fett umhüllten Pulver bestehen. Das Pulver hat, also der Kern der Partikel, enthält unter anderem modifizierte Stärke und ist deshalb nicht unzersetzt schmelzbar. Jedenfalls hat der Kern keinen niedrigeren Schmelzpunkt als die Hülle der in JP 09 125 087 offenbarten Partikel.

Es ist wünschenswert, empfindliche Fette oder Öle in einer Form bereitzustellen, in der sie gegen Verderb, zum Beispiel durch Oxidation, geschützt sind. Weiterhin soll die Form, in der die empfindlichen Fette oder Öle bereitgestellt werden, eine leichte Weiterverarbeitung zu Lebensmitteln ermöglichen. Dabei soll es möglich sein, die Weiterverarbeitung so zu führen, dass die Form, in der die empfindlichen Fette oder Öle bereitgestellt werden, bei der Weiterverarbeitung als solche erhalten bleibt. Weiterhin soll es auch möglich sein, die Weiterverarbeitung so zu führen, dass die Form, in der die empfindlichen Fette oder Öle bereitgestellt werden, bei der Weiterverarbeitung zerstört wird und die empfindlichen Fette oder Öle bei dieser Zerstörung freigesetzt werden.

Die im vorigen Absatz formulierte Aufgabe wird gelöst durch die erfindungsgemäßen Partikel, die ein Gegenstand der vorliegenden Erfindung sind.

Ein Gegenstand der vorliegenden Erfindung sind Partikel, die eine Kern-Hülle Struktur haben (so genannte core-shell Struktur), wobei der Kern ein Öl oder Fett enthält, und wobei die Hülle ein zweites Fett enthält, und wobei der Schmelzpunkt der Hülle mindestens 1°C, insbesondere mindestens 3°C, insbesondere mindestens 5 °C, insbesondere mindestens 10°C, insbesondere mindestens 15 °C, höher ist als der Schmelzpunkt des Kerns, und wobei der Kern bevorzugt flüssig ist, und wobei die Hülle bevorzugt fest ist.

Eine besondere Ausführungsform der vorliegenden Erfindung sind die genannten Partikel, wobei der Kern eine homogene Phase bildet.

Eine weitere besondere Ausführungsform der vorliegenden Erfindung sind die genannten Partikel, wobei die Hülle eine homogene Phase bildet.

Eine weitere besondere Ausführungsform der vorliegenden Erfindung sind die genannten Partikel, wobei das Öl oder Fett, das im Kern enthalten ist, Omega-3-Fettsäuren enthält. Dabei sind die Omega-3-Fettsäuren in der Regel in Form ihrer Ester, insbesondere ihrer Ester mit Glycerin oder ihrer Ester mit Monoacylglycerinresten oder ihrer Ester mit Diacylglycerinestern in dem genannten Öl oder Fett enthalten. Bevorzugt sind Partikel, deren Kern zu mindestens 1, insbesondere mindestens 2, insbesondere mindestens 5 und insbesondere mindestens 10 Gew.-% aus Omega-3-Fettsäuren besteht, wobei diese Omega-3-Fettsäuren frei oder gebunden vorliegen können und wobei die Masse der omega-3-Fettsäuren als freie omega-3-Fettsäuren berechnet wird.

Eine weitere besondere Ausführubgsform der vorliegenden Erfindung sind die genannten Partikel, wobei das Öl oder Fett, das im Kern enthalten ist, Fischöl ist.

Eine weitere besondere Ausführungsform der vorliegenden Erfindung sind die genannten Partikel, wobei das zweite Fett, das in der Hülle enthalten ist, nur gesättigte oder einfach ungesättigte Fettsäuren enthält, insbesondere ausgewählt ist aus der Gruppe bestehend aus gehärtetem Palmöl, gehärtetem Rüböl und Sojaöl. Ferner können auch so genannte Gerüstfette, die bei der Herstellung von Margarine verwendet werden, genutzt werden.

Eine weitere besondere Ausführungsform der vorliegenden Erfindung sind die genannten Partikel, wobei das Öl oder Fett, das im Kern enthalten ist, einen Anteil von mindestens 10 Gew.-%, insbesondere mindestens 30 Gew.-%, insbesondere 30 bis 70 Gew.-% der Partikelmasse ausmacht.

Eine weitere besondere Ausführungsform der vorliegenden Erfindung sind die genannten Partikel, wobei die Partikel einen mittleren Durchmesser von 0,05 bis 0,5 mm, insbesondere von 0,1 bis 0,4 mm, haben, wobei der mittlere Durchmesser durch Auswertung mikroskopischer Bilder bestimmt wird.

Ein weiterer Gegenstand der vorliegenden Erfindung ist die Verwendung der erfindungsgemäßen Partikel zur Herstellung von Lebensmitteln, insbesondere zur Herstellung von Margarine.

Ein weiterer Gegenstand der vorliegenden Erfindung ist ein Verfahren zur Herstellung eines Lebensmittels umfassend das in Kontakt Bringen der erfindungsgemäßen Partikel mit weiteren Bestandteilen des Lebensmittels, wobei das Verfahren insbesondere weiterhin umfasst die Zerstörung der Partikel (insbesondere die Zerstörung durch Schmelzen).

Ein weiterer Gegenstand der vorliegenden Erfindung ist ein Lebensmittel, das die erfindungsgemäßen Partikel nach einem der Ansprüche 1 bis 6 enthält.

Ein weiterer Gegenstand der vorliegenden Erfindung ist das erfindungsgemäße Lebensmittel, wobei das Lebensmittel ausgewählt ist aus der Gruppe bestehend aus einem Milchprodukt, insbesondere Joghurt, einem Snack-Riegel, einer Wurstware, einer Fleischware und Brot.

Die erfindungsgemäßen Partikel haben viele Vorteile. Die erfindungsgemäßen Partikel schützen das umhüllte Öl oder Fett, z. B. gegen Oxidation bei Lagerung Transport und Verarbeitung. Außerdem reduzieren die erfindungsgemäßen Partikel einen möglicherweise vorhandenen unangenehmen Geruch oder Geschmack das umhüllten Öls oder Fetts.

Es ist zum Beispiel möglich, die erfindungsgemäßen Partikel als Bestandteil von Lebensmitteln zu verwenden, wobei die erfindungsgemäßen Partikel Fischöl oder ähnliche von Hause aus geruchs- oder geschmacksintensive Öle oder Fette enthalten können. Dabei werden unangenehme sensorische Eigenschaften (Geruch, Geschmack) durch die Partikel vermieden, ohne dass das Fischöl (oder die anderen verwendeten Öle oder Fette) wie sonst üblich hochgradig raffiniert werden müsste. Trotzdem können so z. B. die wertvollen Omega-3-Fettsäuren des Fischöls in das fetthaltige Nahrungsmittel eingebracht werden.

Weiterhin ist es zum Beispiel möglich, aus den erfindungsgemäßen Partikeln Margarine herzustellen, wobei die Partikel z. B. Fischöl enthalten können, das Omega-3-Fettsäuren in die Margarine einbringt. Dabei können die Partikel bei der Einarbeitung in die Margarine durch Schmelzen zerstört werden, so dass beim Verzehr der Margarine keine unangenehmen Partikel auf der Zunge verspürt werden. Auf diese Weise war das Fischöl vor der Einarbeitung in die Margarine geschützt. Nach der Einarbeitung ist es durch die Fettmatrix der Margarine geschützt.

EP-B 0 726 765 offenbart ein Verfahren zur Herstellung von festen Formen mit gesteuerter Wirkstoff-Freisetzung und einen Apparat zur Durchführung dieses Verfahrens. Nach diesem Verfahren können die Partikel gemäß der vorliegenden Erfindung hergestellt werden.

Außerdem können die erfindungsgemäßen Partikel in Lebensmittel eingebracht werden, ohne sie zu zerstören, wenn ihre körnige Struktur nicht stört.

Außerdem können in den erfindungsgemäßen Partikeln z. B. weniger reine Fischöle verwendet werden, weil der Geruch und Geschmack des Fischöls durch die Hülle der Partikel abgeschirmt ist.

Die erfindungsgemäßen Partikel sind in der Regel herstellungsbedingt nahezu kugelförmig.

### Beispiele

### Beispiel 1: Herstellung der Partikel

Die Partikel wurden hergestellt nach dem Verfahren wie beschrieben in EP-B 0 726 765 B1. Fig. 1 zeigt die verwendete Vorrichtung. Der Sprühkopf (1) wurde in Schwingung versetzt (20-25 kHz). Das Produkt (homogene Fettschmelze wie im Folgenden beschreiben) wurde am Produkteintritt (2) zugeführt. Am Produktaustritt (3) trat das Produkt tangential aus, die entstehenden Tröpfchen wurden durch die Schwingung beim Verlassen des Sprühkopfs (1) in Rotation versetzt. Der Sprühstrahl wurde in eine auf-20°C bis -50°C gekühlte Kammer gesprüht.

Fischöl wurde mit gehärtetem Palmfett gemischt und soweit erwärmt, dass alles komplett flüssig und homogen vermischt war. Die Rohproduktmischung wurde über ein temperierbares Vorlagegefäß in den Sprühkopf (1) eingespeist. Der Sprühkopf (1) bestand im Wesentlichen aus einem unten abgerundeten Stößel und einem passgenauen Ring um den Stößel, in den das Produkt eingespeist wurde. Aufgrund der hochfrequenten Schwingungen wurde der Stößel des Sprühkopfs in seiner Form verändert, wodurch im Rhythmus der Schwingungen Produkt durch den entstehenden Spalt austreten konnte. Die Schwingungen beschleunigten die entstehenden Tröpfchen und schleuderten sie tangential vom abgerundeten Ende in Richtung Auffangkammer. Gleichzeitig wurden die Tröpfchen in Rotation versetzt. Die Auffangkammer wurde mittels Flüssigstickstoff gekühlt. Üblicherweise wurden Temperaturen zwischen -50°C und -20°C eingestellt.

Die technischen Daten der Versuchsdurchführung waren:

| | |
|---|---|
| Stickstoffverbrauch | 0,5 kg N₂ / l Produkt |
| Schwingungsfrequenz | 20 - 25 kHz |

Folgende Versuche wurden durchgeführt:

| Versuch Nr. | Rohstoff | Menge [%] | Temperatur Vorlage [°C] | Temperatur Auffangkammer [°C] | Raps-, Rüböl geh. [%] | Bemerkung |
|---|---|---|---|---|---|---|
| 1 | Fischöl 18/12 | 50 | 75-75 | -40 | 50 | Gut zu sprühen |
| 2 | Fischöl 18/12 | 60 | 75-75 | -40 | 40 | Gut zu sprühen |
| 3 | Fischöl 18/12 | 40 | 75-75 | -40 | 60 | Gut zu sprühen |

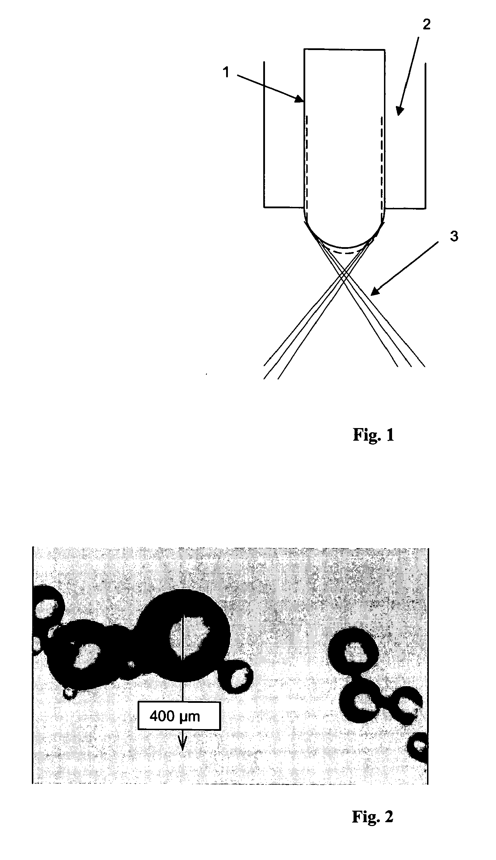

Fig. 2 zeigt Fischöl-Partikel (40 Gew.-% in gehärtetem Palmfett) erhalten nach Beispiel 1 (Vergrößerung 100-fach)

### Beispiel 2: Einarbeitung in Margarine

Die gecoateten Fischölkapseln aus Beispiel 1 wurden in Margarine eingearbeitet:

### Beispiel 2-1:

Gecoatete Fischölkapseln (60 Gew.-% Fischöl, 40 Gew.-% gehärtetes Rüböl) wurden bei Raumtemperatur in Margarine eingearbeitet

### Sensorikergebnisse dieser Partikel:

| Durchschnittswerte | Margarine ohne Zusatz v. Rau krem | Margarine v. Rau krem + 10% gecoatets Fischöl | Margarine v. Rau krem + 20% gecoatetes Fischöl |
|---|---|---|---|
| Geschmack ranzig | 0,00 | 0,00 | 0,00 |
| Geschmack "grieselig" (d. h. dass Partikel auf der Zunge wahrgenommen werden können) | 0,00 | 1,00 | 2,00 |
| Geschmack fischig | 0,00 | 0,00 | 0,00 |

Die Zahlen der sensorischen Bewertung bedeuten: 0 = neutral, 1 = leicht, 2 = mittel, 3 = stark. Dies bedeutet z. B. dass der grieselige Eindruck bei Zugabe von 10 % gecoatetem Fischöl leicht war

Die Fischölkapseln machten sich im Mundgefühl erwartungsgemäß bemerkbar.

### Beispiel 2-2:

Gecoatete Fischölkapseln (60 Gew.-% Fischöl, 40 Gew.% gehärtetes Rüböl) wurden bei 60°C in Margarine eingearbeitet.

Sensorische Bewertung: eingearbeitet in Margarine bei 60°C

| Durchschnittswerte | Margarine ohne Zusatz v. Rau krem | Margarine v. Rau krem + 10 Gew.-% gecoatetes Fischöl | Margarine v. Rau krem + 20 Gew.-% gecoatetes Fischöl |
|---|---|---|---|
| Geschmack ranzig | 0,00 | 0,00 | 0,00 |
| Geschmack grieselig | 0,00 | 0,00 | 0,00 |
| Geschmack fischig | 0,00 | 0,00 | 0,00 |

Trotz des hohen Fischöl-Anteiles von bis zu 20% konnte in beiden Beispielen kein Fischgeschmack identifiziert werden. Der Gehalt an LC-PUFAs ("long chain polyunsaturated fatty acids") (omega-3) betrug in diesen Beispielen 1,8 g (10% Fischölkapseln) bzw. 3,6g (20% Fischölkapseln)

## Patentansprüche

1. Partikel, die eine Kern-Hülle Struktur haben,
wobei der Kern ein Öl oder Fett enthält,
und wobei die Hülle ein zweites Fett enthält,
und wobei der Schmelzpunkt der Hülle mindestens 1°C höher ist als der Schmelzpunkt des Kerns, und wobei der Kern bevorzugt flüssig ist, und wobei die Hülle bevorzugt fest ist.

2. Die Partikel nach Anspruch 1, wobei der Kern eine homogene Phase bildet.

3. Die Partikel nach Anspruch 1 oder 2, wobei die Hülle eine homogene Phase bildet.

4. Die Partikel nach einem der Ansprüche 1 bis 3, wobei das Öl oder Fett, das im Kern enthalten ist, Omega-3-Fettsäuren enthält und bevorzugt ein Fischöl ist.

5. Die Partikel nach einem der Ansprüche 1 bis 4, wobei das zweite Fett, das in der Hülle enthalten ist, nur gesättigte oder einfach ungesättigte Fettsäuren enthält.

6. Die Partikel nach einem der Ansprüche 1 bis 5, wobei das Öl oder Fett, das im Kern enthalten ist, einen Anteil von mindestens 10 Gew.-% der Partikelmasse ausmacht.

7. Die Partikel nach einem der Ansprüche 1 bis 6, wobei die Partikel einen mittleren Durchmesser von 0,05 bis 0,5 mm, insbesondere von 0,1 bis 0,4 mm, haben, wobei der mittlere Durchmesser durch Auswertung mikroskopischer Bilder bestimmt wird.

8. Die Verwendung der Partikel nach einem der Ansprüche 1 bis 7 zur Herstellung von Lebensmitteln, insbesondere zur Herstellung von Margarine.

9. Ein Verfahren zur Herstellung eines Lebensmittels umfassend das in Kontakt Bringen der Partikel nach einem der Ansprüche 1 bis 7 mit weiteren Bestandteilen des Lebensmittels.

10. Ein Lebensmittel, das die Partikel nach einem der Ansprüche 1 bis 6 enthält, wobei das Lebensmittel bevorzugt ausgewählt ist aus der Gruppe bestehend aus einem Milchprodukt, insbesondere Joghurt, einem Snack-Riegel, einer Wurstware, einer Fleischware und Brot.
